# EUROPÄISCHE PATENTSCHRIFT

(11) **EP 0 632 898 B1**
(45) Veröffentlichungstag und Bekanntmachung des Hinweises auf die Patenterteilung: **07.05.1997**
(21) Anmeldenummer: 94902608.2
(22) Anmeldetag: 18.12.1993
(51) Int. Cl.: G01P 1/02

(54) **STROMSCHIENE, INSBESONDERE FÜR EINEN INDUKTIVEN SENSOR**
BUSBAR, IN PARTICULAR FOR AN INDUCTIVE SENSOR
BARRE CONDUCTRICE DESTINEE EN PARTICULIER A UN CAPTEUR INDUCTIF

(30) Priorität: 22.01.1993 DE 4301596
(43) Veröffentlichungstag der Anmeldung: 11.01.1995
(73) Patentinhaber: ROBERT BOSCH GMBH, 70442 Stuttgart (DE)
(72) Erfinder: BISCHOF, Rolf, D-99891 Fischbach (DE); WEYRICH, Gerd-Uwe, D-99848 Wutha-Farnroda (DE)
(86) Internationale Anmeldenummer: DE9301221
(87) Internationale Veröffentlichungsnummer: WO9417419

(56) Entgegenhaltungen:
- EP-A- 0 480 844
- DE-A- 4 106 104
- US-A- 4 888 551

## Beschreibung

### Stand der Technik

Die Erfindung geht aus von einer Stromschiene nach der Gattung des Anspruchs 1. Ein derartiger Sensor ist beispielsweise aus DE-A-4 106 104 bekannt. Insbesondere bei Stromschienen, die bei induktiven Sensoren verwendet werden, wird auf das der Spule zugewandte Ende der Stromschiene die Wicklung der Spule aufgewickelt. Anschließend wird dieses Ende von der Spule weg umgebogen und in zum Beispiel am Gehäuse ausgebildeten Rastnasen fixiert. Die Rastnasen sind dabei aus Kunststoff hergestellt. Durch die unterschiedlichen Materialien zwischen den Stromschienen und den Rastnasen ergeben sich bei Temperaturschwankungen unterschiedliche thermische Ausdehnungen. Kunststoffe, die einerseits eine genügend gute Fixierung des Endes der Stromschiene ermöglichen, haben andererseits keine ausreichende Dehnung, um ein Einsetzen des Endes der Stromschiene ohne Verschleiß an den Rastnasen zu ermöglichen.

### Vorteile der Erfindung

Die erfindungsgemäße Stromschiene mit den kennzeichnenden Merkmalen des Anspruchs 1 hat demgegenüber den Vorteil, daß eine sichere Fixierung der Stromschiene möglich ist. Durch die gleichen Materialien für die Stromschiene und für die Fixierung können keine Relativbewegungen bei Temperaturschwankungen auftreten. Die Fixierung bzw. die Rasterung läßt sich in der Stromschiene während der Herstellung in einfacher Weise durch ein Schnittwerkzeug mit einbringen. Da das Ende der Stromschiene bereits umgebogen wird, läßt sich die Sicherungslasche im gleichen Arbeitsgang mit umbiegen. Ferner entstehen keine kritischen Wandstärken im Bereich der Fixierung.

Durch die in dem abhängigen Anspruch aufgeführte Maßnahme sind vorteilhafte Weiterbildungen und Verbesserungen der im Anspruch 1 angegebenen Stromschiene möglich.

### Zeichnung

Ein Ausführungsbeispiel der Erfindung ist in der Zeichnung dargestellt und in der nachfolgenden Beschreibung näher erläutert. Es zeigen die Figur 1 einen Sensor im Querschnitt mit eingebauter Stromschiene, Figur 2 eine Stromschiene mit ausgetanzter Sicherungslasche und Figur 3 eine Stromschiene im Verfahrensschritt vor dem Umbiegen der Sicherungslasche.

### Beschreibung des Ausführungsbeispiels

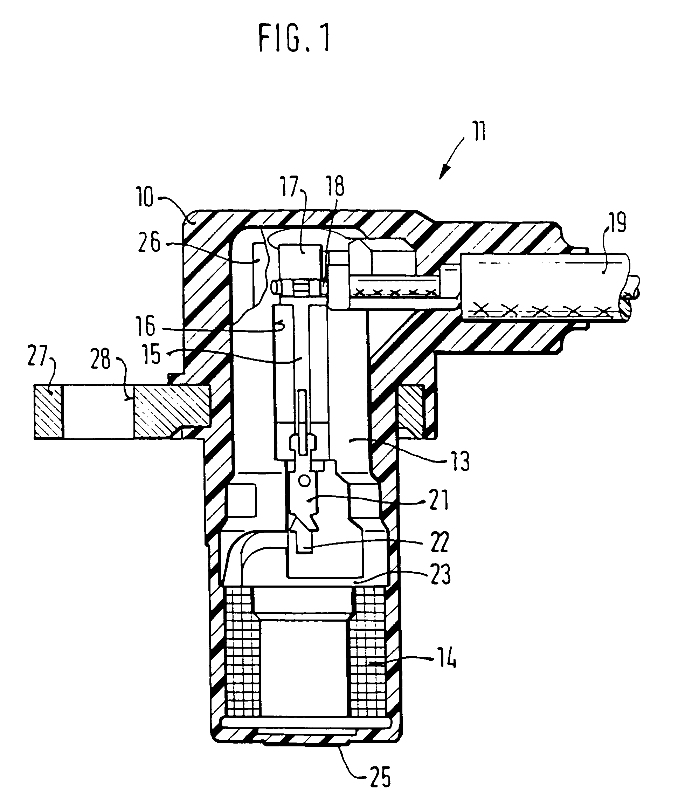

In der Figur 1 ist mit 10 ein im Spritzgußverfahren hergestelltes Gehäuse eines Drehzahlsensors 11 bezeichnet, das aus magnetisch nicht leitender Spritzgußmasse besteht. In das Gehäuse 10 ist ein langgestreckter Spulenkörper 13 mit einer eine Wicklung aufweisenden Spule 14 eingesetzt. Die Wicklung 14 der Spule 15 ist an zwei (in der Zeichnung hintereinanderliegenden) Stromschienen 15 angeschlossen, die in Längsnuten 16 des Spulenkörpers 13 angeordnet sind. Die nach oben ragenden freien Enden der Stromschienen 15 sind zur Signalabnahme mit einem Leiter 18 eines zweiadrigen Anschlußkabels 19 kontaktiert, zum Beispiel angeschweißt oder angelötet. Der spulenseitige Endabschnitt 21 der Stromschienen 15 ist umgebogen und ragt von der Spule 14 weg. Die dadurch entstehende Biegung 22 der Stromschienen 15 ist aber möglichst nahe beim Spulenschild 23 des Spulenkörpers 13. Als Spulenschild sind die beiden am Spulenkörper ausgebildeten Begrenzungen für die Spule 14 zu verstehen. An den Endabschnitten 21 der Stromschienen 15 ist das jeweilige Ende, d.h. der Anfang bzw. das Ende, der Wicklung der Spule 14 befestigt. In den Spulenkörper 13 ist im Bereich der Spule 14 ein Polstift 25 angeordnet. Dieser Polstift 25 steht in Wirkverbindung mit einem nicht dargestellten Zahnrad oder einem sonstigen Rotationsteil, dessen Drehbewegung bestimmt werden soll. Es weist Bereiche aus magnetisch leitendem und magnetisch weniger leitendem Material auf. An der dem Rotationsteil abgewandten Stirnseite des Polstifts 25 ist ein Permanentmagnet 26 angeordnet. In das Gehäuse 10 ist eine Befestigungslasche 27 aus Metall eingebettet. Zur Befestigung des Sensors 11 mit Hilfe der Befestigungslasche 27 ist in dieser eine Bohrung 28 ausgebildet.

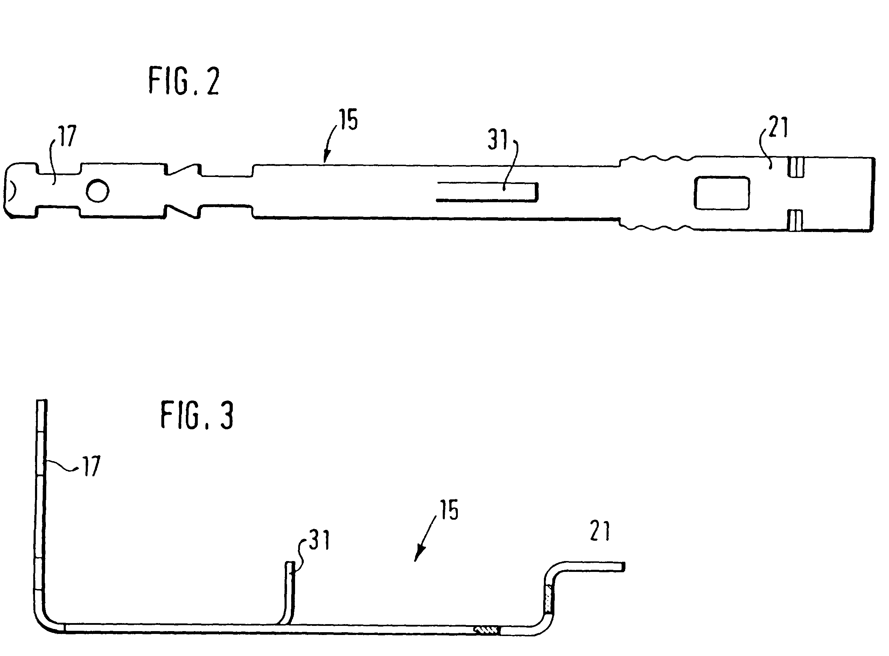

Erfindungsgemäß ist in der Stromschiene 15 eine Sicherungslasche 31 ausgebildet. In der Figur 2 ist hierbei die Stromschiene 15 in einem Grundzustand dargestellt, wobei am Ende 21 die Enden der Wicklungen der Spulen 14 noch nicht aufgewickelt sind. Die Sicherungslasche 31 kann hierbei gleichzeitig mit dem die Stromschiene 15 aus einer Grundplatte herausstanzendem Schnittwerkzeug mit hergestellt werden. Im weiteren Verfahren wird die Sicherungslasche 31 hochgebogen, wie es in der Figur 3 dargestellt ist. Ist die Stromschiene 15 im Spulenkörper 17 eingebaut und sind die Enden der Wicklungen der Spule 14 am Ende 21 aufgewickelt, so wird dieses Ende 21 von der Spule weg zur Stromschiene 15 hin umgebogen, bis das Ende 21 auf der Stromschiene 15 aufliegt. Anschließend wird die Sicherungslasche 31 umge-bogen, bis sie auf dem Ende 21 aufliegt. Der Bereich, in dem die Sicherungslasche 31 ausgebildet ist, ist davon abhängig, in welcher Höhe das Ende 21 an der Stromschiene 15 selbst wieder zur Anlage kommt. Es ist so abzustimmen, daß die Sicherungslasche 31 wenigstens teilweise das Ende 21 überdeckt, wie es in der Figur 1 eingezeichnet ist. Anschließend wird die so vormontierte Baueinheit, bestehend aus Spulenkörper 13, Stromschienen 15 und Spulen 14, Permanentmagnet 26 und Polstift 25 in die Befestigungslasche 27 eingesetzt und in ein Spritzgußwerkzeug eingelegt. Anschließend wird der gesamte Drehzahlsensor mit einer Spritzgußmasse umgossen. Eine sichere Fixierung des Endes 21 durch die Sicherungslasche 31 ist insbesondere deshalb notwendig, da bei umgespritztem Gehäuse 10 eventuell auftretende Defekte nicht repariert werden können.

Die Wirkungsweise des Drehzahlsensors ist hinreichend bekannt und braucht deshalb hier nicht ausführlich erläutert zu werden. Von der Spule 14 wird ein Magnetfeld erzeugt, das dem Magnetfeld des Permanentmagneten 26 übergelagert ist. Wird nun das Zahnrad an der Spitze des Polstifts 25 vorbeibewegt, so ändert sich während der Bewegung des Zahnrads aufgrund der Zähne und der Zahnlücken der Abstand, d.h. der Luftspalt zwischen dem Polstift und dem Zahnrad wird geändert. Dadurch wird auch das Magnetfeld beeinflußt und somit ein Meßsignal erzeugt.

Die Verwendung der Stromschiene 15 mit der Sicherungslasche 31 ist nicht auf Drehzahlsensoren beschränkt. Ihre Verwendung ist aber insbesondere bei Sensoren mit einem Spritzgußgehäuse 10 besonders vorteilhaft.

## Patentansprüche

1. Stromschiene (15), insbesondere für einen induktiven Sensor (11), zur Verbindung der Enden der Wicklungen einer Spule (14) und einer elektrischen Zuführung (19), wobei die Stromschiene (15) einen umgebogenen Endabschnitt (21) aufweist, an dem das Ende oder der Anfang der Wicklung der Spule (14) befestigt ist, dadurch gekennzeichnet, daß die Stromschiene (15) eine Lasche (31) aus dem gleichen Material aufweist, die auf den umgebogenen Endabschnitt (21) aufgelegt ist.

2. Stromschiene nach Anspruch 1, dadurch gekennzeichnet, daß die Lasche (31) aus der Stromschiene (15) herausgeschnitten ist.

## Claims

1. Busbar (15), in particular for an inductive sensor (11), for connecting the ends of the windings of a coil (14) and an electric feed line (19), the busbar (15) having a bent-over end section (21) to which the end or the start of the winding of the coil (14) is attached, characterized in that the busbar (15) has a clip (31) made of the same material, which is positioned on the bent-over end section (21).

2. Busbar according to Claim 1, characterized in that the clip (31) is cut out of the busbar (15).

## Revendications

1. Barre conductrice (15), en particulier pour un capteur inductif (11), servant à relier les extrémités des enroulements d'une bobine (14) et une alimentation électrique (19), la barre conductrice (15) présentant une section terminale (21) recourbée à laquelle est fixée l'extrémité ou le début de l'enroulement de la bobine (14),
caractérisée en ce que
la barre conductrice (15) présente une patte (31) réalisée dans la même matière, qui est posée sur la section terminale recourbée (21).

2. Barre conductrice selon la revendication 1,
caractérisée en ce que
la patte (31) est découpée à partir de la barre conductrice (15).
